# EUROPEAN PATENT APPLICATION

(11) **EP 2 573 751 A1**
(43) Date of publication of application: **27.03.2013**
(21) Application number: 11786584.0
(22) Date of filing: 23.05.2011
(51) Int. Cl.: G09F 19/00, G06F 3/048, G06F 3/14, G06Q 30/00

(54) **DISPLAY CONTROL PROGRAM, RECORDING MEDIUM WHEREUPON DISPLAY PROGRAM IS RECORDED, DISPLAY CONTROL DEVICE, AND DISPLAY CONTROL METHOD**

(30) Priority: 28.05.2010 JP 2010122496
(71) Applicant: Rakuten, Inc., Tokyo 140-0002 (JP)
(72) Inventor: TAKAMI Shinya, Tokyo 140-0002 (JP)
(74) Representative: HOFFMANN EITLE
(86) International application number: PCT/JP2011/061728
(87) International publication number: WO 2011/148885

(57) **Abstract**

When display of an advertising content among a plurality of contents is deleted according to an operation by a user in a terminal apparatus that displays a Web page where the plurality of contents are arranged, a display area of a main content with the display area adjacent to the deleted advertising content among the plurality of contents is expanded. Content specific information indicating the deleted advertising content is stored, and the advertising content indicated by the stored content specific information is regenerated at predetermined timing.

## Description

### Technical Field

The present invention relates to a technical field of deleting display of one of a plurality of contents displayed on a display area according to a predetermined operation by a user.

### Background Art

On a Web page distributed from a Web server through a network and displayed on a terminal of a user, a plurality of advertising display frames related to products and services are generally arranged in addition to a display frame of a primary content (hereinafter, called "main content") desired by the user. Advertising contents are displayed in the advertising display frames.

However, the advertising contents are usually arranged at conspicuous positions for a reader, and the reading efficiency of the main content may be reduced. Particularly, when a large number of advertising contents are displayed in one screen, a large number of operations, such as scrolling, are needed for the user to read the main content.

To solve the problem, there is a known technique of switching advertising contents displayed in a display frame arranged in a Web page, every certain time (for example, see Patent Literature 1).

### Citation List

### Patent Literature

Patent Literature 1:Japanese Patent Laid-Open No. 2009-145406

### Summary of the Invention

### Problem to be solved by the Invention

However, since the advertising contents are switched every certain time in the conventional technique, the advertising effect intended by the distributor of the Web page may be reduced.

The present invention has been made in view of the circumstances, and an object of the present invention is to provide a display control program, a recording medium recording the display control program, a display control apparatus, and a display control method that can maintain an advertising effect of advertising contents, while facilitating visualization (improving readability) of a main content for a user.

### Means for solving the Problem

In order to solve the above problem, the invention according to claim 1 is a display control program for causing a computer to execute:
a first display step of displaying a plurality of contents in a display area of a terminal apparatus;
a deletion step of deleting display of an advertising content among the plurality of contents displayed in the display area according to an operation by a user;
a storage step of storing content specific information indicating the advertising content deleted in the deletion step;
an area expansion step of expanding a display area of a main content with the display area adjacent to the deleted advertising content among the plurality of contents according to the deletion of the display of the advertising content; and
a second display step of regenerating the advertising content indicated by the stored content specific information in the display area of the terminal apparatus at predetermined timing.
According to the present invention, it is possible that a main content not deleted among a plurality of contents is made easy to see (improvement of readability), and it is possible to continue an advertising effect (a reading effect) produced by a deleted advertising content.

The invention according to claim 2 is the display control program according to claim 1,
wherein in the area expansion step, the display area of the main content is expanded to include at least part of the display area of the advertising content before the deletion of the display of the advertising content.
According to the present invention, it is possible to utilize a display area of a deleted advertising content, and efficiently expand a display area of a main content.

The invention according to claim 3 is the display control program according to claim 2,
wherein the advertising content is arranged at an absolute position on a Web page where the plurality of contents are arranged, the main content is arranged at a relative position with reference to an arrangement position of another content on the Web page, and
in the area expansion step, the reference position is changed according to the deletion of the display of the advertising content to expand the display area of the main content.
According to the present invention, it is possible to efficiently expand a display area of a main content.

The invention according to claim 4 is the display control program according to claim 2,
wherein a set content including the advertising content and the main content is arranged at an absolute position on the Web page where the plurality of contents are arranged, the main content is arranged at a relative position with reference to an arrangement position of the advertising content in a display area of the set content, and
in the area expansion step, the reference position is changed according to the deletion of the display of the advertising content to expand the display area of the main content.
According to the present invention, it is possible to efficiently expand a display area of a main content.

The invention according to claim 5 is the display control program according to claim 2,
wherein in the area expansion step, when the display of part of the plurality of advertising contents displayed in a second display area adjacent to a first display area of the main content is deleted, the display of the advertising content other than the deleted advertising content is deleted from the second display area to expand the display area of the main content.
It is possible to avoid a user's troublesome operation.

The invention according to claim 6 is the display control program according to claim 2,
wherein in the area expansion step, when the display of part of the plurality of advertising contents displayed in a second display area adjacent to a first display area of the main content is deleted, the display position of the advertising content other than the deleted advertising content is moved to a display area outside of the first and second display areas to expand the display area of the main content.
It is possible to avoid a user's troublesome operation.

The invention according to claim 7 is the display control program according to claim 1,
wherein in the area expansion step, a layer for displaying the main content before the deletion of the display of the advertising content is changed to expand the display area of the main content.
According to the present invention, it is possible to efficiently expand a display area of a main content.

The invention according to claim 8 is the display control program according to any one of claims 1 to 7,
wherein the plurality of contents are arranged at predetermined positions on the Web page, and
in the second display step, the advertising content is arranged at a different position from the arrangement position on the Web page before the deletion of the display to regenerate the advertising content in the display area.
According to the present invention, it is possible to regenerate a deleted advertising content in such a way that the reading of a non-deleted main content is not obstructed.

The invention according to claim 9 is the display control program according to claim 8,
wherein in the second display step, the advertising content is arranged at part of the Web page not displayed in the display area at the deletion of the display of the advertising content, and the advertising content is regenerated in the display area according to scroll of the Web page in the display area.
According to the present invention, it is possible to regenerate a deleted advertising content in such a way that the reading of a non-deleted main content is not obstructed.

The invention according to claim 10 is the display control program according to claim 8,
wherein in the second display step, the advertising content is regenerated in the display area in a still state when the Web page is scrolling in the display area.
According to the present invention, it is possible to regenerate a deleted advertising content in such a way that the reading of a non-deleted main content is not obstructed.

The invention according to claim 11 is the display control program according to any one of claims 1 to 10, further causing the computer to execute:
a measurement step of measuring time from the display of the adverting content in the display area to the deletion of the advertising content; and
a determination step of determining a display mode of the advertising content to be regenerated based on the measured time, wherein
in the second display step, the advertising content is regenerated in the display area in the determined display mode.
According to the present invention, it is possible to efficiently regenerate a deleted content in accordance with time to the deletion.

The invention according to claim 12 is the display control program according to claim 11,
wherein in the determination step, a display size of the advertising content to be regenerated is set as the display mode, and a smaller display size is set for the advertising content to be regenerated when the measured time is shorter.
According to the present invention, a size of a content deleted immediately after a display is made small, so it is possible that the reading of a main content is not obstructed.

The invention according to claim 13 is the display control program according to any one of claims 1 to 12, further causing the computer to execute:
a measurement step of measuring, for each of the contents, time from the display of the advertising content in the display area to the deletion of the advertising content when the display of the plurality of advertising contents is deleted; and
a determination step of determining a priority of the display of each of the advertising contents to be regenerated based on the measured time,
wherein in the second display step, each of the advertising contents is regenerated in the display area according to the determined priority.
According to the present invention, it is possible to efficiently regenerate a deleted content in accordance with time to the deletion.

The invention according to claim 14 is a recording medium recording a computer-readable display control program for causing a computer to execute:
a first display step of displaying a plurality of contents in a display area of a terminal apparatus;
a deletion step of deleting display of an advertising content among the plurality of contents displayed in the display area according to an operation by a user;
a storage step of storing content specific information indicating the advertising content deleted in the deletion step;
an area expansion step of expanding a display area of a main content with the display area adjacent to the deleted advertising content among the plurality of contents according to the deletion of the display of the advertising content; and
a second display step of regenerating the advertising content indicated by the stored content specific information in the display area of the terminal apparatus at predetermined timing.

The invention according to claim 15 is a display control apparatus comprising:
a first display means that displays a plurality of contents in a display area of a terminal apparatus;
a deletion means that deletes display of an advertising content among the plurality of contents displayed in the display area according to an operation by a user;
a storage means that stores content specific information indicating the advertising content deleted by the deletion means;
an area expansion means that expands a display area of a main content with the display area adjacent to the deleted advertising content among the plurality of contents according to the deletion of the display of the advertising content; and
a second display means that regenerates the advertising content indicated by the stored content specific information in the display area of the terminal apparatus at predetermined timing.

The invention according to claim 16 is a display control method comprising:
a step of displaying a plurality of contents in a display area of a terminal apparatus;
a deletion step of deleting display of an advertising content among the plurality of contents displayed in the display area according to an operation by a user;
a step of storing content specific information indicating the advertising content deleted in the deletion step;
a step of expanding a display area of a main content with the display area adjacent to the deleted advertising content among the plurality of contents according to the deletion of the display of the advertising content; and
a step of regenerating the advertising content indicated by the stored content specific information in the display area of the terminal apparatus at predetermined timing.

### Advantageous Effects of the Invention

According to the present invention, visualization of a main content not deleted among a plurality of contents can be facilitated (readability can be improved), and an advertising effect (reading effect) of a deleted advertising content can be maintained.

### Brief Description of Drawings

Fig. 1 is a diagram showing an example of a schematic configuration of an information providing system S according to the present embodiment.
Fig. 2A is a block diagram showing an example of a schematic configuration of a user terminal 1, and Fig. 2B is a block diagram showing an example of a schematic configuration of an information providing server 2.
Fig. 3 is a conceptual diagram showing an example of a Web page for arranging a plurality of contents.
Fig. 4 is a flow chart showing a display control process by a control unit of the user terminal 1.
Fig. 5A and Fig. 5B are conceptual diagrams showing expansion of display areas of main contents displayed on window screens.
Fig. 6A and Fig. 6B are conceptual diagrams showing expansion of display areas of main contents displayed on window screens.
Fig. 7 is a conceptual diagram showing expansion of a display area of a main content displayed on a window screen.
Fig. 8 is a conceptual diagram showing regeneration of contents.
Fig. 9 is a conceptual diagram showing regeneration of each content according to a determined priority.
Fig. 10 is a conceptual diagram showing regeneration of each content in a determined display size.

### Mode for carrying out the Invention

An embodiment of the present invention will be described with reference to the drawings. The embodiment described below is an embodiment in which the present invention is applied to an information providing system.

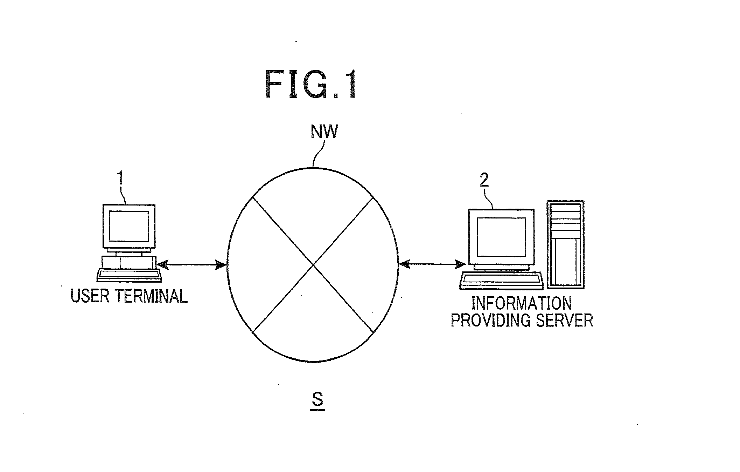

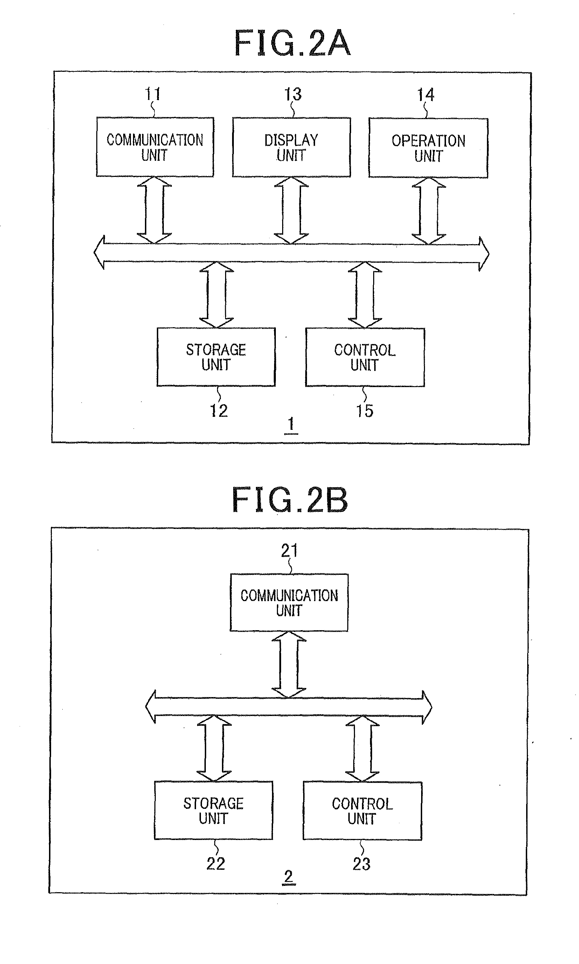

First, a configuration and a functional overview of an information providing system S according to an embodiment of the present invention will be described with reference to Fig. 1, Fig. 2A, Fig. 2B, and the like.

Fig. 1 is a diagram showing an example of a schematic configuration of the information providing system S according to the present embodiment. As shown in Fig. 1, the information providing system S includes a user terminal 1 (example of a terminal apparatus and a display control apparatus) and an information providing server 2. Although the example shown in Fig. 1 illustrates one user terminal 1 for the convenience of the description, there are a large number of user terminals 1 for individual users.

The user terminal 1 and the information providing server 2 can use, for example, TCP/IP or the like as a communication protocol to mutually transfer data through a network NW. The network NW is constructed by, for example, the Internet, a dedicated communication line (for example, a CATV (Community Antenna Television) line), a mobile communication line (including a base station and the like), a gateway, and the like.

Fig. 2A is a block diagram showing an example of a schematic configuration of the user terminal 1, and Fig. 2B is a block diagram showing an example of a schematic configuration of the information providing server 2.

As shown in Fig. 2A, the user terminal 1 includes a communication unit 11, a storage unit 12, a display unit 13, an operation unit 14, a control unit 15, and the like. For example, a personal computer (PC), a mobile telephone, a personal digital assistant (PDA), a smartphone integrating the mobile phone and the personal digital assistant, a mobile game machine, or the like can be applied as the user terminal 1.

The communication unit 11 connects to the network NW to control a state of communication with the information providing server 2 and the like.

The storage unit 12 includes a hard disk drive and the like. An operating system and various programs, such as a Web browser program, are stored in the storage unit 12.

The display unit 13 includes a display and the like and displays information, such as text and images.

The operation unit 14 includes a keyboard and a mouse, or a touch panel I/F (interface), and receives an operation instruction from the user to output the operation signal to the control unit 15.

The control unit 15 includes a CPU (Central Processing Unit), a ROM (Read Only Memory), a RAM (Random Access Memory) as storage means, and the like and reads and executes programs stored in the storage unit 12 to execute processes described later. The control unit 15 is an example of a first display means, a deletion means, an area expansion means, and a second display means according to the present invention.

The control unit 15 accesses the information providing server 2 through a Web browser to acquire a Web page for arranging various contents (objects) and displays (renders) the Web page on a window screen emerged on a display of the display unit 13. In this way, a plurality of contents are displayed in the window screen. The window screen is an active display area of the user terminal 1 (in other words, the Web browser), and in a case of full screen display, the active display area is a full screen.

As shown in Fig. 2B, the information providing server 2 includes a communication unit 21, a storage unit 22, a control unit 23, and the like.

The communication unit 21 connects to the network NW to control a state of communication with the user terminal 1 and the like.

The storage unit 22 includes a hard disk drive and the like. An operating system and various programs, such as a server program, are stored in the storage unit 22.

A structured document (for example, HTML (Hyper Text Markup Language) document, XHTML document, or the like) file, an image (still image) file, a moving image file, and the like that form the Web page for displaying various contents are stored in the storage unit 22. Each content arranged on the Web page includes, for example, at least one of a text, a still image, and a moving image.

There are various contents, such as main contents including results of search by the user and advertising contents. Each content is defined as an element by, for example, a div tag (<div>...</div>) in the structured document.

The size, the arrangement position, and the like of each content in the Web page are defined by, for example, a position property for designating an arrangement method (static (does not designate an arrangement method), absolute (designates an absolute position), and relative (designates a relative position)), a top and left property for designating the arrangement position, a float property for designating float of an element, and the like in a style section of the content in the structured document.

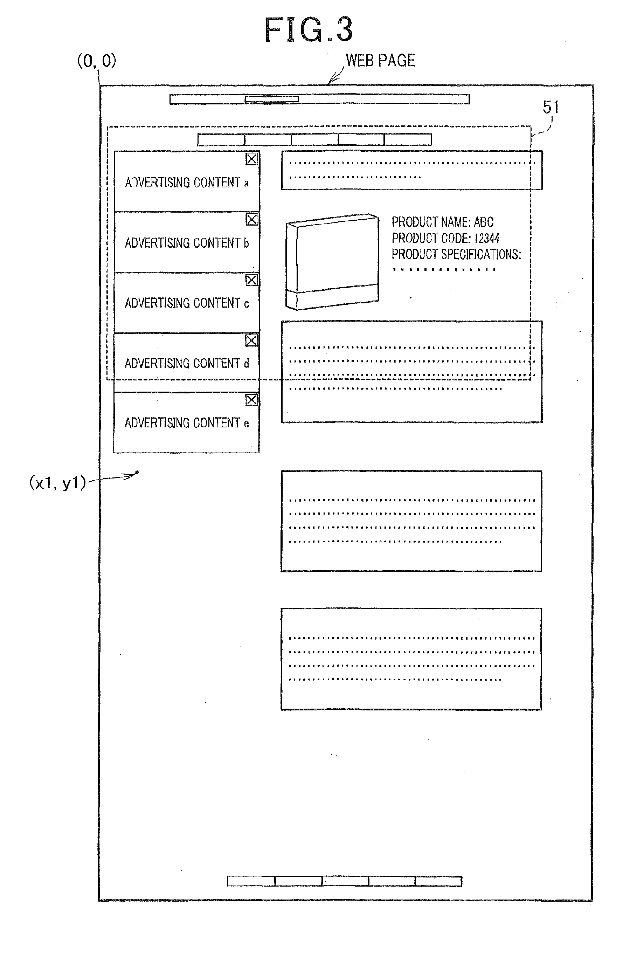

Fig. 3 is a conceptual diagram showing an example of a Web page for arranging a plurality of contents. As shown in Fig. 3, a plurality of contents are arranged on the Web page at predetermined positions and in predetermines sizes. In the example shown in Fig. 3, the size in a dashed line frame 51 is equivalent to the size of the window screen of the Web browser. More specifically, although the entire area of the Web page shown in Fig. 3 cannot be displayed in the window screen at a time, the Web page can be scrolled according to a scroll operation by the user to display the Web page in the window screen. For example, advertising contents (contents a to e in the example shown in Fig. 3) among the contents arranged at the predetermined positions on the Web page can be deleted (hidden) from the Web page based on an operation of the user (hereinafter, called "user operation") when the advertising contents are displayed on the window screen. The advertising contents are, for example, contents (for example, banners) for providing information with which an information provider advertises or introduces products or the like to the user. Content IDs as unique identification information are provided at least to the contents that can be deleted (hidden) from the Web page. For example, the content ID is added as an id property to the div tag that defines the content.

The control unit 23 includes a CPU, a ROM, a RAM, and the like and reads and executes programs stored in the storage unit 22 to execute processes described later.

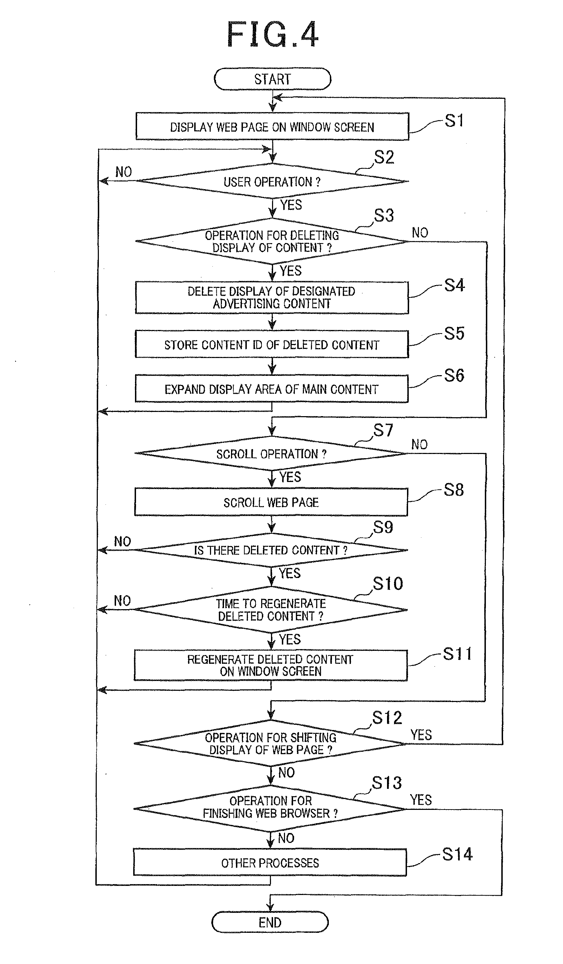

Operation of the information providing system S according to the present embodiment will be described with reference to Fig. 4 and the like.

Fig. 4 is a flow chart showing a display control process by the control unit 15 of the user terminal 1. A display control program for causing the control unit 15 of the user terminal 1 to execute the steps in the display control process (the control unit 23 of the information providing server 2 may execute part of the steps) is defined by at least one of a Web browser installed on the user terminal 1, plug-in software incorporated into the Web browser, a script described in the structured document that forms the Web page (for example, JavaScript (registered trademark)), a server program, and the like. For example, the display control program of the present invention may be downloaded from a predetermined server through the network NW or may be recorded in a recording medium, such as a CD-ROM, and read through a drive.

After the control unit 15 of the user terminal 1 launches the Web browser, the process shown in Fig. 4 is started when the user terminal 1 receives a Web page transmitted from the information providing server 2 by accessing the information providing server 2. It is assumed that the received Web page is a Web page provided with a plurality of contents as shown in Fig. 3.

When the process shown in Fig. 4 is started, the control unit 15 of the user terminal 1 displays the received Web page on the window screen of the display unit 13 (step S1).

The control unit 15 of the user terminal 1 determines whether there is a user operation (step S2). The user operation here denotes an operation of the operation unit 14 of the user terminal 1. If the control unit 15 of the user terminal 1 determines that there is a user operation (step S2: YES), the process proceeds to step S3.

In step S3, the control unit 15 of the user terminal 1 determines whether the user operation in step S2 is an operation for deleting (that is, for hiding) the display of the content. If the control unit 15 of the user terminal 1 determines that the operation is for deleting the display of the content (step S3: YES), the process proceeds to step S4. On the other hand, if the control unit 15 of the user terminal 1 determines that the operation is not for deleting the display of the content (step S3: NO), the process proceeds to step S7.

In step S4, the control unit 15 of the user terminal 1 deletes (hides) the display of an advertising content designated by the user among the plurality of contents displayed on the window screen, and the process proceeds to step S5. To designate the content to be deleted, the user uses, for example, a mouse in the operation unit 14 to click a "×" button arranged for each content as shown for example in Fig. 3. Although the display of the designated advertising content is deleted, the description of the content (if the content is image data, the URL) remains in the structured document of the Web page. For example, a div tag (data enclosed in <div> and </div>) that defines the advertising content is deleted from the original description place of the structured document by script and copied to another place (or temporarily stored in the RAM), or the content of the div tag is rewritten as an element that is not to be displayed.

In step S5, the control unit 15 of the user terminal 1 temporarily stores (until the display of the Web page is finished) a content ID of the content as content specific information indicating the deleted advertising content (associates with the div tag that defines the content), and the process returns to step S2. At this point, the control unit 15 of the user terminal 1 may be configured to store the display time of the content along with the content ID of the deleted advertising content. In this case, the control unit 15 measures the time from the display of the content on the window screen to the deletion of the display of the content as the display time of the content. Although the content ID of the content is stored as the content specific information indicating the deleted advertising content in the example, the information may be other information as long as the deleted advertising content can be specified. For example, the deleted advertising content may be stored as the content specific information.

The control unit 15 of the user terminal 1 may be configured to transmit at least one of the content specific information (including the URL of the Web page) indicating the deleted advertising content and the display time of the content to the information providing server 2. In this case, the control unit 23 of the information providing server 2 stores the content specific information and the like received from the user terminal 1 in association with the user specific information (for example, the IP address allocated to the user terminal 1 or the user ID provided to identify the user) for specifying the user terminal 1 (or the user).

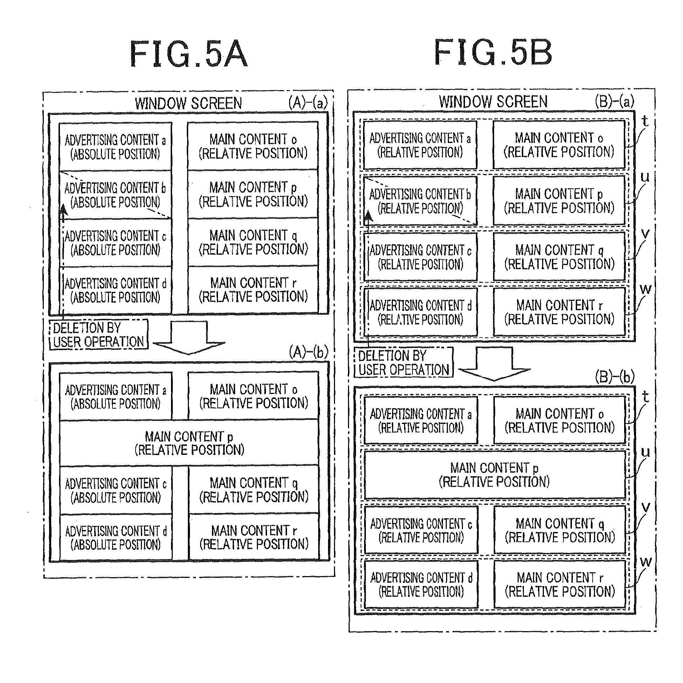

In step S6, according to the deletion of the display of the advertising content in step S4, the control unit 15 of the user terminal 1 expands the display area of the main content with the display area adjacent to the deleted advertising content (for example, a main content o with the display area adjacent to the advertising content a in the example shown in (A)-(a) of Fig. 5A) among the plurality of contents displayed on the window screen. For example, the control unit 15 of the user terminal 1 expands the display area of the main content by script to include at least part of the display area of the advertising content before the deletion of the display of the advertising content. Alternatively, the control unit 15 of the user terminal 1 may be configured to change, by script, the layer for displaying the main content before the deletion of the display of the advertising content to expand the display area of the main content. Some examples of expanding the display area of the main content will be described in detail with reference to Fig. 5A to Fig. 7. Fig. 5A to Fig. 7 are conceptual diagrams showing expansion of the display area of the main content displayed on the window screen.

In the example shown in (A) - (a) of Fig. 5A, the advertising contents a to d are lined up in a longitudinal direction (Y axis direction) of the window screen. Main contents o to p are also lined up in the longitudinal direction of the window screen. In the example shown in (A)-(a) of Fig. 5A, the display areas of the advertising contents a to d and the main contents o to p are illustrated by rectangular boxes surrounded by solid lines. The advertising contents a to d are arranged at absolute positions on the Web page, and the main contents o to p are arranged at relative positions based on the arrangement positions of other contents on the Web page. For example, the main content p is arranged at a relative position based on the arrangement position of the advertising content b. The main content with the display area adjacent to the advertising content (the display areas of the advertising content b and the main content p are adjacent to each other) floats on the right side of the advertising content. The reason that the advertising contents a to d are arranged at the absolute positions is, for example, to prevent the advertising content c arranged below the advertising content b from being moved up and arranged when the display of the advertising content b is deleted. When, for example, the display of the advertising content b is deleted by user operation as shown in (A)-(a) of Fig. 5A, the advertising content b as a basis of the arrangement position of the main content p has disappeared as shown in (A)-(b) of Fig. 5A. Therefore, the control unit 15 changes the position as a basis of the main content p to expand the display area of the main content p. Therefore, the display area of the main content p is expanded to include the display area of the advertising content b before the deletion of the display of the advertising content b. According to the configuration, visualization of the main content can be efficiently facilitated.

Meanwhile, in the example shown in (B)-(a) of Fig. 5B, set contents (parent contents) t to w including the advertising contents and the main contents are lined up in the longitudinal direction of the window screen. In the example shown in (B)-(a) of Fig. 5B, the display areas of the advertising contents t to w are illustrated by rectangular boxes surrounded by dashed lines. For example, the set content u includes a set of the advertising content b and the main content p. The set contents t to w are arranged at absolute positions on the Web page. The advertising contents and the main contents are arranged at relative positions in the display areas of the set contents t to w. For example, the main content p is arranged at a relative position based on the arrangement position of the advertising content b. When, for example, the display of the advertising content b is deleted by user operation as shown in (B)-(a) and (b) of Fig. 5B, the control unit 15 changes the position as a basis of the main content p to expand the display area of the main content p as in the example shown in (A)-(a) and (b) of Fig. 5A. According to the configuration, visualization of the main content can also be efficiently facilitated.

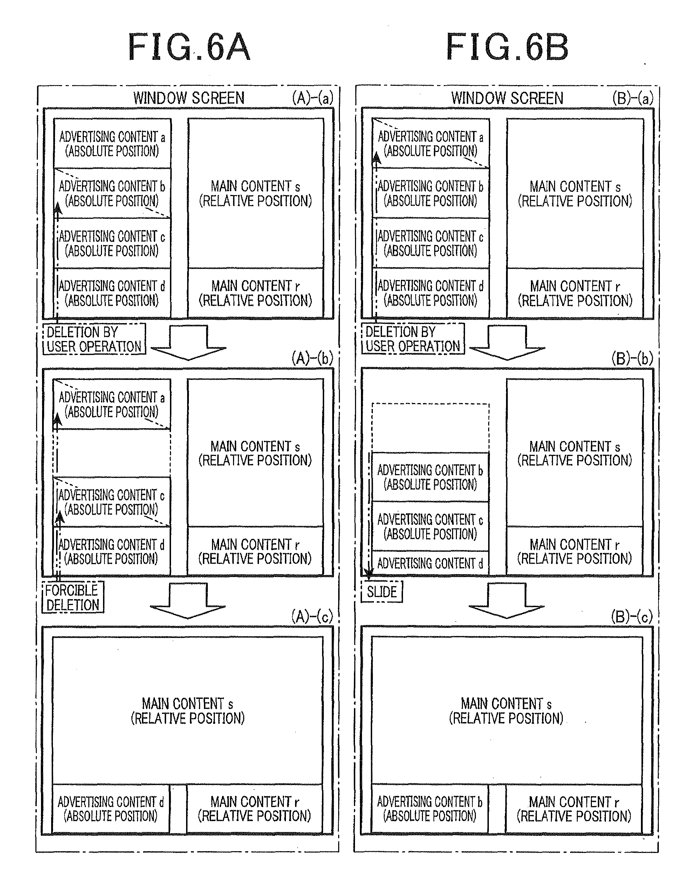

Meanwhile, in the example showing in (A)-(a) of Fig. 6A, the advertising contents a to d are lined up in the longitudinal direction of the window screen. Main contents s and r are also lined up in the longitudinal direction of the window screen. The advertising contents a to d are arranged at absolute positions on the Web page, and the main contents s and r are arranged at relative positions based on the arrangement positions of other contents on the Web page. For example, the main content s is arranged at a relative position based on the arrangement position of the advertising content a. In the example shown in (A)-(a) of Fig. 6A, the size (area) of the display area (example of a first display area) of the main content s is greater than the size of the display areas of the advertising contents a to d, and the display area of the main content s is adjacent to a total display area (example of a second display area) of the display areas of the three advertising contents a to c. Therefore, the display area of the main content s is expanded when the display of all advertising contents a to c is deleted, and in the example shown in (A)-(a) and (b) of Fig. 6A, the display of the remaining advertising contents a and c displayed in the total display area are forcibly (without user operation) deleted when the display of the advertising content b displayed in the total display area is deleted by user operation. More specifically, when the display of part of (for example, the advertising content b) the plurality of advertising contents a to c displayed in the total display area adjacent to the display area of the main content s is deleted by user operation, the control unit 15 forcibly deletes, from the total display area, the display of the advertising contents a and c other than the deleted advertising content b to expand the display area of the main content s. According to the configuration, a burdensome operation by the user (for example, operation for deleting the display of all advertising contents in the total display area) to expand the display area of the main content can be prevented.

In the example shown in (A)-(a) and (b) of Fig. 6A, when the display of one advertising content b among the plurality of advertising contents a to c displayed in the total display area is deleted by user operation, the display of the advertising contents a and c is forcibly deleted. For another example, when the display of more than a predetermined proportion (for example, 60%) of advertising contents (for example, two of the advertising contents a to c) among the plurality of advertising contents displayed in the total display area is deleted by user operation, the advertising contents other than the deleted advertising contents may be forcibly deleted.

Meanwhile, in the example shown in (B)-(a) of Fig. 6B, the advertising contents a to d and the main contents s and r are arranged as in the example shown in (A)-(a) of Fig. 6A. In the example shown in (A) - (a) and (b) of Fig. 6A, when the display of the advertising content a displayed in the total display area is deleted by user operation, the display positions of the remaining advertising contents b and c displayed in the total display area are forcibly (without user operation) slid (example of movement) downward. More specifically, when the display of part of (for example, the advertising content a) the plurality of advertising contents a to c displayed in the total display area adjacent to the display area of the main content s is deleted by user operation, the control unit 15 moves the display positions of the advertising contents b and c other than the deleted advertising content a to other display areas outside of the display area of the main content c and the total display area (change the absolute positions of the advertising contents b and c) to expand the display area of the main content s. In the example shown in (B)-(a) and (b) of Fig. 6B, the display of the advertising content d displayed outside of the total display area is deleted according to the movement of the display positions of the advertising contents b and c. According to the configuration, a burdensome operation by the user to expand the display area of the main content can also be prevented.

In the example shown in (B)-(a) and (b) of Fig. 6B, when the display of one advertising content a among the plurality of advertising contents a to c displayed in the total display area is deleted by user operation, the display positions of the advertising contents b and c other than the deleted advertising content a is forcibly moved. For another example, when the display of more than a predetermined proportion (for example, 60%) of advertising contents (for example, two of the advertising contents a to c) among the plurality of advertising contents displayed in the total display area is deleted by user operation, the display positions of the advertising contents other than the deleted advertising contents may be forcibly deleted.

The advertising content forcibly deleted as described above may be displayed in the display area of another advertising content outside of the total display area, wherein the display is switched between the advertising content and the other advertising content. In this case, for example, the advertising contents a and c forcibly deleted as shown in (A)-(b) of Fig. 6A are displayed, wherein the display is switched between the advertising contents a, c and the advertising content d outside of the total display area at a predetermined time interval. For example, c and d forcibly moved and deleted as shown in (B)-(b) of Fig. 6B is displayed, wherein the display is switched between c, d and the advertising content b at a predetermined time interval. The advertising content deleted by user operation may be displayed, wherein the display is switched between the advertising content and the forcibly deleted advertising content.

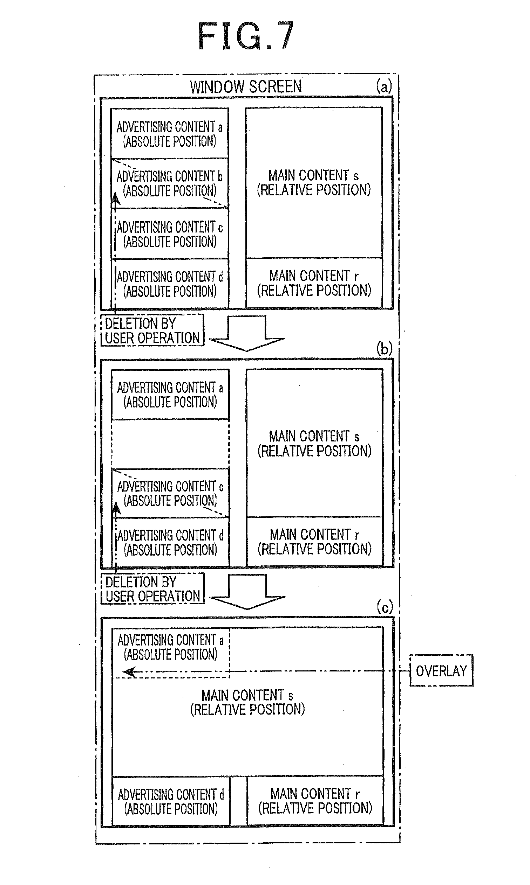

Meanwhile, in an example shown in (a) of Fig. 7, the advertising contents a to d and the main contents s and r are arranged as in the example shown in (A)-(a) of Fig. 6A. In the example shown in (a) to (c) of Fig. 7, when the display of the advertising contents b and c displayed in the total display area are deleted by user operation, the control unit 15 changes the layer for displaying the main content s before the deletion of the display of the advertising contents b and c to expand the display area of the main content s. The changed layer where the main content s is arranged is a layer on the front side of the layer before the change. To change the layer, for example, a Z index value (z-index: order on the Z axis of the layer) can be changed (for example, changed from 0 to 1) by script in the style section of the div tag that defines the main content s. In this way, the display area of the advertising content a is overlaid by the display area of the main content s as shown in (c) of Fig. 7. According to the configuration, a burdensome operation by the user to expand the display area of the main content can also be prevented. It is desirable that the changed layer where the main content s is arranged is set to transparency (for example, translucent) that allows the user to visually check the overlaid advertising content a. For example, "filter:Alpha(opacity=50)" is set in the style section of the div tag that defines the main content s.

In the example shown in (a) to (c) of Fig. 7, when the display of two advertising contents b and c among the plurality of advertising contents a to c displayed in the total display area is deleted by user operation, the layer for displaying the main content s is changed. For another example, when the display of more than a predetermined proportion (for example, 30%) of advertising contents (for example, one of the advertising contents a to c) among the plurality of advertising contents displayed in the total display area is deleted by user operation, the layer for displaying the main content s may be changed.

Meanwhile, in step S7, the control unit 15 of the user terminal 1 determines whether the user operation in step S2 is a scroll operation for scrolling the Web page. If the control unit 15 of the user terminal 1 determines that the user operation is a scroll operation (step S7: YES), the process proceeds to step S8. On the other hand, if the control unit 15 of the user terminal 1 determines that the user operation is not a scroll operation (step S7: NO), the process proceeds to step S12.

In step S8, the control unit 15 of the user terminal 1 scrolls the Web page according to the scroll operation (for example, scrolls in a horizontal direction (transverse direction), a vertical direction (longitudinal direction), or an oblique direction). The Web page is scrolled from the start of the scroll operation by the user until the end of the scroll operation. Examples of the scroll operation by the user include rotation of a wheel (button between left and right buttons) of a mouse by the user, movement of the scroll bar displayed near the window screen by the user using a drag function of a mouse, press of an up, down, left, or right key of a keyboard by the user, use of a pointing device such as a mouse by the user to drag the window screen to move the active display area in an arbitrary direction, and flick (for example, swipe by finger) on a touch-panel window screen by the user (when the operation unit 14 includes a touch panel I/F).

The control unit 15 of the user terminal 1 determines whether there is a deleted advertising content (step S9). If the content ID is stored in step S5, it is determined that there is a deleted advertising content. If the control unit 15 of the user terminal 1 determines that there is a deleted advertising content (step S9: YES), the process proceeds to step S10. On the other hand, if the control unit 15 of the user terminal 1 determines that there is no deleted advertising content (step S9: NO), the process returns to step S2.

In step S10, the control unit 15 of the user terminal 1 determines whether it is time to regenerate the deleted advertising content on the window screen. For example, when a rearrangement position (for example, coordinates (x1, y1) shown in Fig. 3) preset on the Web page is displayed on the window screen by the scroll, it is determined that it is time to regenerate the deleted advertising content on the window screen. The rearrangement position of the deleted advertising content is set, for example, in the structured document of the Web page. The rearrangement position may be written by, for example, coordinates of a predetermined point on the Web page or may be written by coordinates defining a predetermined area.

If the control unit 15 of the user terminal 1 determines that it is time to regenerate the deleted advertising content on the window screen (step S10: YES), the process proceeds to step S11. On the other hand, if the control unit 15 of the user terminal 1 determines that it is not time to regenerate the deleted advertising content on the window screen (step S10: NO), the process returns to step S2.

In step S11, the control unit 15 of the user terminal 1 regenerates the deleted advertising content (that is, the content indicated by the content ID stored in step S5) at the rearrangement position to regenerate the content on the window screen. Therefore, the advertising content deleted in step S4 is rearranged at a position different from the arrangement position on the Web page before the deletion of the display of the content (returned to another location). As a result, the deleted advertising content can be regenerated without distracting reading of the main content not deleted. The rearrangement of the content can be realized by, for example, describing an empty tag (for example, between <div> and </div> is empty) in the structured document of the Web page in advance, and when it is determined that it is time to regenerate the content on the window screen, changing (in other words, replacing) the empty tag to the div tag defining the content indicated by the content ID stored in step S5.

The control unit 15 of the user terminal 1 may be configured to transmit the coordinates of the area of the Web page displayed on the window screen to the information providing server 2 during the scroll of the Web page. In this case, the "determination of whether it is time for regeneration" in step S10 is executed by the control unit 23 of the information providing server 2. If the control unit 23 of the information providing server 2 determines that it is time to regenerate the deleted advertising content on the window screen, the control unit 23 transmits, to the user terminal 1, the content indicated by the content ID associated with the user specific information stored in step S5 in the information providing server 2 to regenerate the content on the window screen.

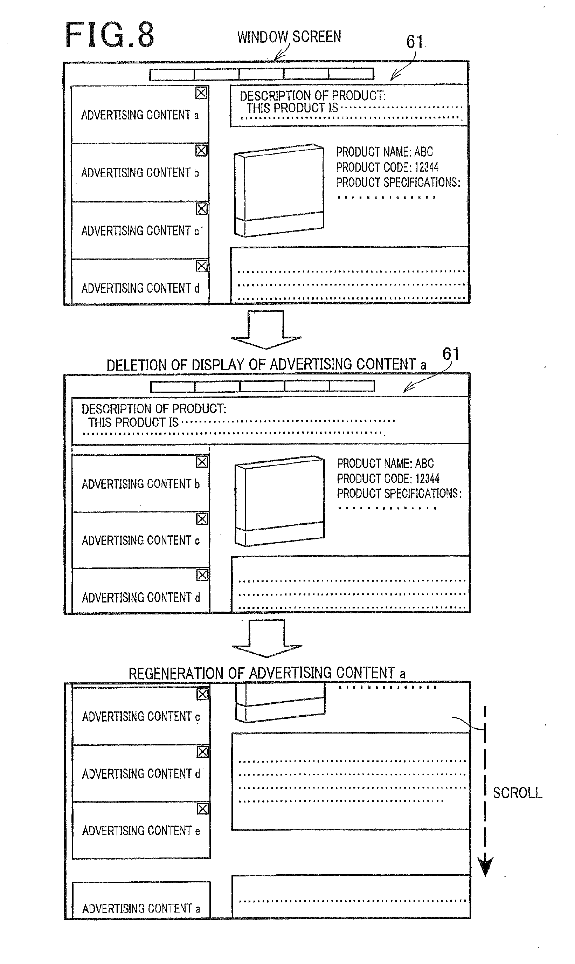

Fig. 8 is a conceptual diagram showing regeneration of content. In an example shown in Fig. 8, a display area 61 of the main content is expanded by deletion of the display of the advertising content a, and the font size of the characters included in the main content is increased. The advertising content a is rearranged on part (area) of the Web page not displayed on the window screen at the deletion of the display of the content a, and the content a is regenerated on the window screen according to the scroll of the Web page in the window screen. As a result, the user can easily view (readability is improved) the main content not deleted, and the deleted advertising content can be efficiently regenerated without distracting reading of the main content.

If there are a plurality of advertising contents deleted in step S4 (that is, if a plurality of content IDs are stored in step S5), the control unit 15 of the user terminal 1 regenerates each content in a predetermined order of display (for example, randomly or in the order of deletion of the display) in step S11. In this case, the control unit 15 of the user terminal 1 may be configured to determine the priority of the display of each content to be regenerated based on the display time of each content stored along with the content ID and may regenerate each content on the window screen according to the determined priority.

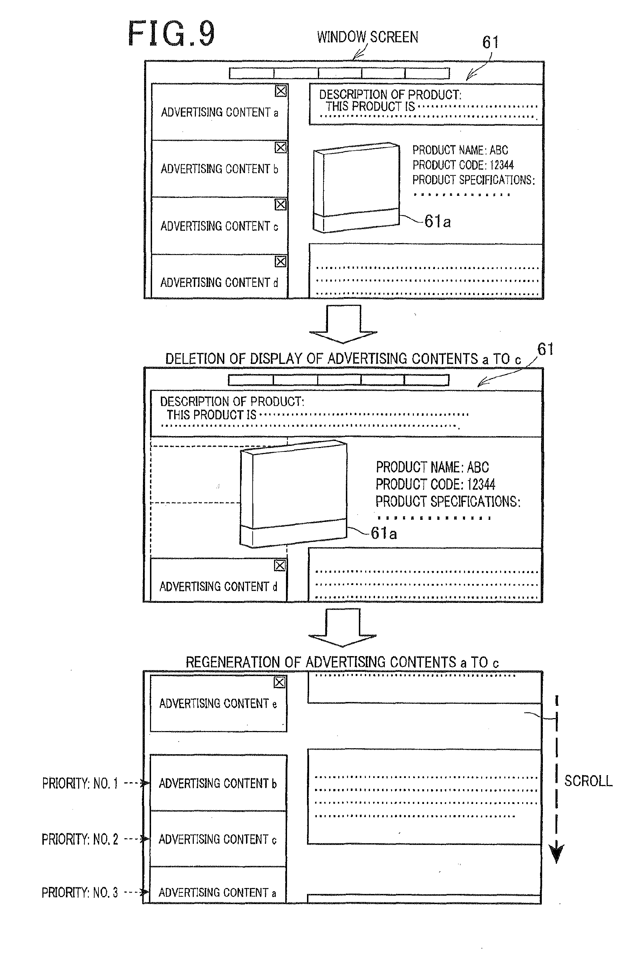

Fig. 9 is a conceptual diagram showing regeneration of each content according to the determined priority. In an example shown in Fig. 9, the display area 61 of the main content is expanded by the deletion of the display of the advertising contents a to c, and the size of an image 61a included in the main content and the font size of characters are enlarged by script. In the example shown in Fig. 9, since the size (area) of the display area of the deleted advertising contents is greater than in the example shown in Fig. 8, the visualization of the main content can be further facilitated for the user. In the example shown in Fig. 9, the contents are regenerated on the window screen in the order of priorities according to the scroll of the Web page in the window screen. The priority of the content to be generated is set lower when the measured display time of the content is shorter. This is because it can be estimated that the user is not interested in the content deleted just after the display. As a result, the deleted advertising content can be effectively regenerated according to the display time.

In place of the user terminal 1, the control unit 23 of the information providing server 2 may be configured to determine the priority of display of each content based on the display time of each content stored along with the content ID and transmit information indicating the priority of each content to the user terminal 1 along with the content indicated by the content ID to regenerate each content on the window screen according to each priority.

For another example of the case with a plurality of advertising contents deleted in step S4, the control unit 15 of the user terminal 1 may be configured to determine a display mode of the content to be regenerated based on the display time of each content stored along with the content ID to regenerate each content on the window screen by the determined display mode. Examples of the display mode include the display size, the display color, and the like.

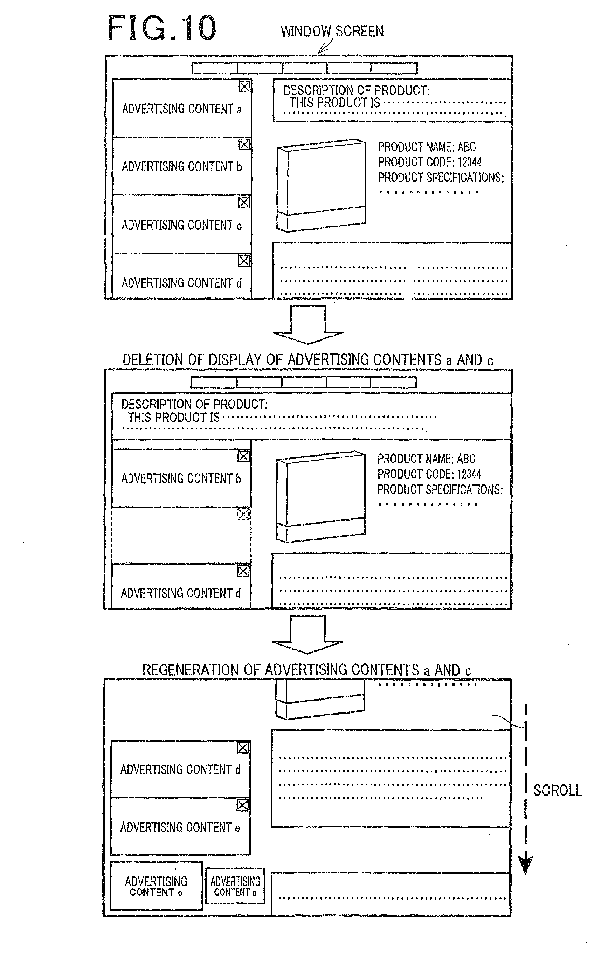

Fig. 10 is a conceptual diagram showing regeneration of each content in the determined display size. In an example shown in Fig. 10, for example, the contents a and c are regenerated in display sizes reduced from the original display sizes. The display size of the content to be regenerated is set smaller when the display time of the measured content is shorter. This is because it can be estimated that the user is not interested in the content deleted just after the display. As a result, the deleted advertising content can be effectively regenerated according to the display time. The display color of the content to be regenerated (for example, color of the entire image) may be set to a less inconspicuous color (for example, gray) when the display time of the measured content is shorter.

In place of the user terminal 1, the control unit 23 of the information providing server 2 may be configured to determine a display mode of each content based on the display time of each content stored along with the content ID and transmit information indicating the display mode of each content (or content updated by the determined display mode) to the user terminal 1 along with the content indicated by the content ID to regenerate each content on the window screen in each display mode.

For another example of the case with a plurality of advertising contents deleted in step S4, the control unit 15 of the user terminal 1 may be configured to, for example, determine the priority of display (order of display) of each content to be regenerated based on an advertising rate (advertising fee paid by the advertiser) for arranging the advertising content on the Web page (priority is set higher for advertising content with higher advertising rate) and regenerate each content on the window screen according to the determined priority. As a result, the advertising content with higher advertising rate can be regenerated at a higher arrangement position (returned) and brought into clear view. For another example, the control unit 15 of the user terminal 1 may be configured to, for example, determine the number of contents to be regenerated (the number of copies) based on the advertising rate (the number of regenerations (in other words, the number of display areas) is set higher for the advertising content with higher advertising rate) and regenerate the content on the window screen according to the determined number. As a result, the advertising content with higher advertising rate can be regenerated (proliferated) many times and brought into clear view.

The advertising rate of the advertising content may vary depending on the arrangement position on the Web page. For example, the advertising rate is higher for a higher (above) arrangement position, because the content can easily catch the user's attention. In the example of the Web page shown in Fig. 3, the advertising rate of the arrangement position of the advertising content a is the highest, and the advertising rates of lower (below) contents are lower. In consideration of such a case, the control unit 15 of the user terminal 1 may be configured to, for example, determine the priority of display of each content to be generated based on the original arrangement position of the deleted advertising content on the Web page (set a higher priority for an advertising content arranged at a higher arrangement position) and regenerate each content on the window screen according to the determined priority. This can ensure the fairness between the advertisers. For another example, the control unit 15 of the user terminal 1 may be configured to, for example, determine the number of contents to be regenerated (the number of copies) based on the original arrangement position of the deleted advertising content on the Web page (the number of regenerations is set higher for an advertising content arranged at a higher arrangement position) and regenerate the content on the window screen according to the determined number.

Meanwhile, in step S12, the control unit 15 of the user terminal 1 determines whether the user operation in step S2 is an operation for shifting the display of the Web page. The control unit 15 determines that the user operation is an operation for shifting the display of the Web page when, for example, a hyperlink displayed on the Web page is designated, or when the user designates a URL to another site.

If the control unit 15 of the user terminal 1 determines that the operation is for shifting the display of the Web page (step S12: YES), the control unit 15 acquires a new Web page from, for example, the information providing server 2, and the process returns to step S1. On the other hand, if the control unit 15 of the user terminal 1 determines that the operation is not for shifting the display of the Web page (step S12: NO), the process proceeds to step S13.

In step S13, the control unit 15 of the user terminal 1 determines whether the user operation in step S2 is an operation for finishing the Web browser. If the control unit 15 of the user terminal 1 determines that the operation is for finishing the Web browser (step S13: YES), the process shown in Fig. 4 is finished. On the other hand, if the control unit 15 of the user terminal 1 determines that the operation is not for finishing the Web browser (step S13: NO), the process proceeds to step S14.

In another process shown in step S14, processes according to the user operation other than the operations in steps S3, S7, S12, and S13 are executed, and then the process returns to step S2.

As described, according to the embodiment, if the display of the advertising content displayed on the window screen is deleted according to the operation by the user when the Web page for arranging various contents are displayed on the window screen of the user terminal 1, the display area of the main content positioned near the deleted advertising content is expanded, and the deleted advertising content is regenerated on the window screen at the predetermined timing. Therefore, visualization of the main content not deleted can be facilitated for the user (readability is improved). The deleted advertising content is regenerated (returned) later. Therefore, the advertising effect of the advertising content can be maintained.

In step S11, the deleted advertising content is relocated at the predetermined position of the Web page to scroll the content according to the scroll of the Web page. For another example, the deleted advertising content may be regenerated in a still state (does not scroll along with the Web page) on the window screen, when the Web page is scrolled in the window screen. According to the configuration, the deleted advertising content can be effectively regenerated during the scroll of the main content. For another example, the deleted advertising content may be rearranged at an arrangement position of an advertising content arranged below the advertising content, and the lower advertising content may be rearranged at an arrangement position of an advertising content arranged further below. For example, in the example of the Web page shown in Fig. 3, the arrangement positions from the advertising content b to the advertising content e are sequentially slid downward when the display of the advertising content a is deleted (for example, slid by an amount equivalent to the display area of one advertising content), and the advertising content a is rearranged and regenerated at the original arrangement position of the advertising content b. According to the configuration, the deleted advertising content can be immediately regenerated independently from the scroll.

Although an example of applying the present invention to the deletion and the regeneration of the contents arranged on the Web page transmitted from the information providing server 2 to the user terminal 1 has been described in the embodiment, the present invention can also be applied to the deletion and the regeneration of the contents arranged on an electronic document other than the Web page. In this case, the user terminal 1 may be a stand-alone type.

### Reference Signs List

- 1: user terminal
- 2: information providing server
- 11: communication unit
- 12: storage unit
- 13: display unit
- 14: operation unit
- 15: control unit
- 21: communication unit
- 22: storage unit
- 23: control unit
- NW: network
- S: information providing system

## Claims

1. A display control program for causing a computer to execute:
a first display step of displaying a plurality of contents in a display area of a terminal apparatus;
a deletion step of deleting display of an advertising content among the plurality of contents displayed in the display area according to an operation by a user;
a storage step of storing content specific information indicating the advertising content deleted in the deletion step;
an area expansion step of expanding a display area of a main content with the display area adjacent to the deleted advertising content among the plurality of contents according to the deletion of the display of the advertising content; and
a second display step of regenerating the advertising content indicated by the stored content specific information in the display area of the terminal apparatus at predetermined timing.

2. The display control program according to claim 1,
wherein in the area expansion step, the display area of the main content is expanded to include at least part of the display area of the advertising content before the deletion of the display of the advertising content.

3. The display control program according to claim 2,
wherein the advertising content is arranged at an absolute position on a Web page where the plurality of contents are arranged, the main content is arranged at a relative position with reference to an arrangement position of another content on the Web page, and
in the area expansion step, the reference position is changed according to the deletion of the display of the advertising content to expand the display area of the main content.

4. The display control program according to claim 2,
wherein a set content including the advertising content and the main content is arranged at an absolute position on the Web page where the plurality of contents are arranged, the main content is arranged at a relative position with reference to an arrangement position of the advertising content in a display area of the set content, and
in the area expansion step, the reference position is changed according to the deletion of the display of the advertising content to expand the display area of the main content.

5. The display control program according to claim 2,
wherein in the area expansion step, when the display of part of the plurality of advertising contents displayed in a second display area adjacent to a first display area of the main content is deleted, the display of the advertising content other than the deleted advertising content is deleted from the second display area to expand the display area of the main content.

6. The display control program according to claim 2,
wherein in the area expansion step, when the display of part of the plurality of advertising contents displayed in a second display area adjacent to a first display area of the main content is deleted, the display position of the advertising content other than the deleted advertising content is moved to a display area outside of the first and second display areas to expand the display area of the main content.

7. The display control program according to claim 1,
wherein in the area expansion step, a layer for displaying the main content before the deletion of the display of the advertising content is changed to expand the display area of the main content.

8. The display control program according to any one of claims 1 to 7,
wherein the plurality of contents are arranged at predetermined positions on the Web page, and
in the second display step, the advertising content is arranged at a different position from the arrangement position on the Web page before the deletion of the display to regenerate the advertising content in the display area.

9. The display control program according to claim 8,
wherein in the second display step, the advertising content is arranged at part of the Web page not displayed in the display area at the deletion of the display of the advertising content, and the advertising content is regenerated in the display area according to scroll of the Web page in the display area.

10. The display control program according to claim 8,
wherein in the second display step, the advertising content is regenerated in the display area in a still state when the Web page is scrolling in the display area.

11. The display control program according to any one of claims 1 to 10, further causing the computer to execute:
a measurement step of measuring time from the display of the adverting content in the display area to the deletion of the advertising content; and
a determination step of determining a display mode of the advertising content to be regenerated based on the measured time, wherein
in the second display step, the advertising content is regenerated in the display area in the determined display mode.

12. The display control program according to claim 11,
wherein in the determination step, a display size of the advertising content to be regenerated is set as the display mode, and a smaller display size is set for the advertising content to be regenerated when the measured time is shorter.

13. The display control program according to any one of claims 1 to 12, further causing the computer to execute:
a measurement step of measuring, for each of the contents, time from the display of the advertising content in the display area to the deletion of the advertising content when the display of the plurality of advertising contents is deleted; and
a determination step of determining a priority of the display of each of the advertising contents to be regenerated based on the measured time,
wherein in the second display step, each of the advertising contents is regenerated in the display area according to the determined priority.

14. A recording medium recording a computer-readable display control program for causing a computer to execute:
a first display step of displaying a plurality of contents in a display area of a terminal apparatus;
a deletion step of deleting display of an advertising content among the plurality of contents displayed in the display area according to an operation by a user;
a storage step of storing content specific information indicating the advertising content deleted in the deletion step;
an area expansion step of expanding a display area of a main content with the display area adjacent to the deleted advertising content among the plurality of contents according to the deletion of the display of the advertising content; and
a second display step of regenerating the advertising content indicated by the stored content specific information in the display area of the terminal apparatus at predetermined timing.

15. A display control apparatus comprising:
a first display means that displays a plurality of contents in a display area of a terminal apparatus;
a deletion means that deletes display of an advertising content among the plurality of contents displayed in the display area according to an operation by a user;
a storage means that stores content specific information indicating the advertising content deleted by the deletion means;
an area expansion means that expands a display area of a main content with the display area adjacent to the deleted advertising content among the plurality of contents according to the deletion of the display of the advertising content; and
a second display means that regenerates the advertising content indicated by the stored content specific information in the display area of the terminal apparatus at predetermined timing.

16. A display control method comprising:
a step of displaying a plurality of contents in a display area of a terminal apparatus;
a deletion step of deleting display of an advertising content among the plurality of contents displayed in the display area according to an operation by a user;
a step of storing content specific information indicating the advertising content deleted in the deletion step;
a step of expanding a display area of a main content with the display area adjacent to the deleted advertising content among the plurality of contents according to the deletion of the display of the advertising content; and
a step of regenerating the advertising content indicated by the stored content specific information in the display area of the terminal apparatus at predetermined timing.
